# EUROPÄISCHE PATENTSCHRIFT

(11) **EP 2 242 608 B1**
(45) Veröffentlichungstag und Bekanntmachung des Hinweises auf die Patenterteilung: **26.10.2011**
(21) Anmeldenummer: 08872334.1
(22) Anmeldetag: 18.12.2008
(51) Int. Cl.: B23Q 1/66, B23Q 7/14

(54) **BESCHICKUNGS- UND ENTNAHME-ANLAGE FÜR WERKZEUG-MASCHINEN**
FEEDING AND REMOVAL SYSTEM FOR MACHINE TOOLS
SYSTÈME D'ALIMENTATION ET DE PRÉLÈVEMENT POUR MACHINES-OUTILS

(30) Priorität: 14.02.2008 DE 102008009090
(43) Veröffentlichungstag der Anmeldung: 27.10.2010
(73) Patentinhaber: MAG IAS GmbH, 73033 Göppingen (DE)
(72) Erfinder: HORN, Wolfgang, 73035 Göppingen (DE); MEIDAR, Moshe, Israel, New York, NY 10022 (US); HAUS, Waldemar, 71364 Winnenden (DE)
(74) Vertreter: Rau, Schneck & Hübner
(86) Internationale Anmeldenummer: PCT/EP2008/010795
(87) Internationale Veröffentlichungsnummer: WO 2009/100751

(56) Entgegenhaltungen:
- EP-A- 0 180 829
- EP-A- 0 358 928
- EP-A- 1 484 132
- DE-A1-102006 009 136

## Beschreibung

Die Erfindung betrifft eine Beschickungs- und Enmahme-Anlage für Werkzeug-Maschinen gemäß dem Oberbegriff des Anspruches 1.

Aus der EP 1 484 132 A2 ist eine derartige Anlage bekannt, bei der die unbearbeiteten Werkstücke mittels Greifeinrichtungen in die Maschine eingeführt und die bearbeiteten Werkstücke aus dieser herausgenommen werden. Diese Anlage ist nicht sehr flexibel und weist verhältnismäßig hohe Takt-Zeiten auf.

Aus der DE 103 56 536 A1 ist eine Beschickungs- und Entnahme-Anlage für Werkzeug-Maschinen bekannt, bei der einander benachbarte Werkzeug-Maschinen vorgesehen sind. Zwischen diesen Werkzeug-Maschinen sind Werkstückgreifer vorgesehen, die auf Führungen zwischen den Werkzeug-Maschinen verfahrbar sind. Die Greifer sind zum Zu- und Abführen bearbeiteter und unbearbeiteter Werkstücke in die Arbeitsräume der Werkzeug-Maschinen bewegbar.

Aus der EP 1 488 884 A2 ist es bekannt, vor nebeneinander angeordneten Werkzeug-Maschinen eine durchgehende Transportbahn zum Transport von zu bearbeitenden und bearbeiteten Werkstücken vorzusehen. Von dieser Transportbahn werden die Werkstücke mittels einer Zufuhr-Förderbahn oder einer Abfuhr-Förderbahn der jeweiligen Werkzeug-Maschine zugeführt bzw. aus dieser abgeführt. Diese Förderbahnen sind in verschiedenen Ebenen übereinander angeordnet.

Aus der DE 43 40 522 A1 ist es bekannt, bei einer Beschichtungsanlage für scheibenförmige Substrate Schwenkarme zum Werkstückwechsel einzusetzen.

Aus der EP 0 180 829 A2 und der EP 0 358 928 A2 ist es bekannt, Schwenkarme zu Be- und Entladen von Werkstücken in Werkzeug-Maschinen und aus diesen heraus einzusetzen.

Der Erfindung liegt die Aufgabe zugrunde, eine Beschickungs- und Entnahme-Anlage für Werkzeug-Maschinen zu schaffen, die hochflexibel einsetzbar ist und zu einer starken Reduktion der Takt-Zeiten auf der Beschickungs- und Entnahmeseite führt.

Diese Aufgabe wird erfindungsgemäß durch die Merkmale im Kennzeichnungsteil des Anspruches 1 gelöst. Die an der jeweiligen Werkzeug-Maschine angebrachten Belade-Arme und Entlade-Arme, die zwei Schwenk-Achsen und eine vertikale Verschiebemöglichkeit aufweisen, werden zur Aufnahme eines unbearbeiteten Werkstücks von einer Zuführ-Einrichtung und zum Beschicken der Werkzeug-Maschine eingesetzt, während die Entlade-Arme zur Entnahme des bearbeiteten Werkstücks aus der Werkzeug-Maschine eingesetzt werden. Die erfindungsgemäßen Maßnahmen sind für serielle Bearbeitungsprozesse anwendbar, bei denen also jeweils auf einer Werkzeug-Maschine eine abschließende Bearbeitung eines Werkstücks stattfindet. Die erfindungsgemäßen Maßnahmen sind aber auch für parallele Bearbeitungs-Prozesse einsetzbar, bei denen nebeneinander angeordnete Werkzeug-Maschinen den gleichen Bearbeitungsvorgang an unterschiedlichen Werkstücken vornehmen.

Vorteilhafte Ausgestaltungen ergeben sich aus den Unteransprüchen.

Weitere Merkmale, Vorteile und Einzelheiten der Erfindung ergeben sich aus der nachfolgenden Beschreibung von Ausführungsbeispielen der Erfindung anhand der Zeichnung. Es zeigt:
- Fig. 1: ein erstes Ausführungsbeispiel einer für serielle Bearbeitungsprozesse ausgestalteten Anlage nach der Erfindung in Frontansicht,
- Fig. 2: die Anlage nach Fig. 1 in Draufsicht,
- Fig. 3: ein zweites Ausführungsbeispiel einer für parallele Bearbeitungsprozesse ausgelegten Anlage nach der Erfindung in Frontansicht und
- Fig. 4: die Anlage nach Fig. 3 in Draufsicht.

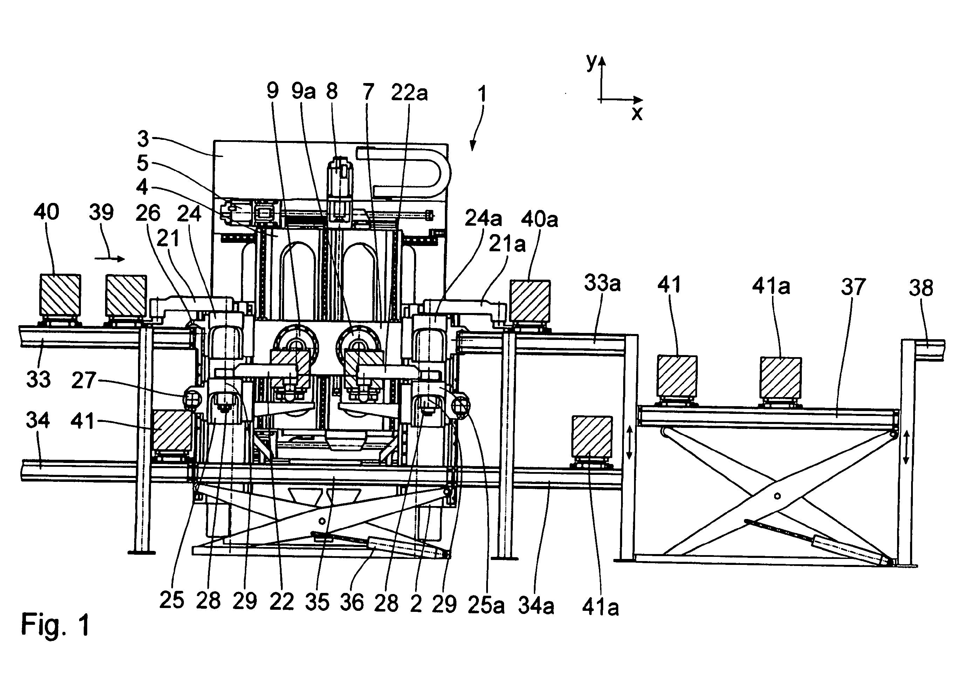

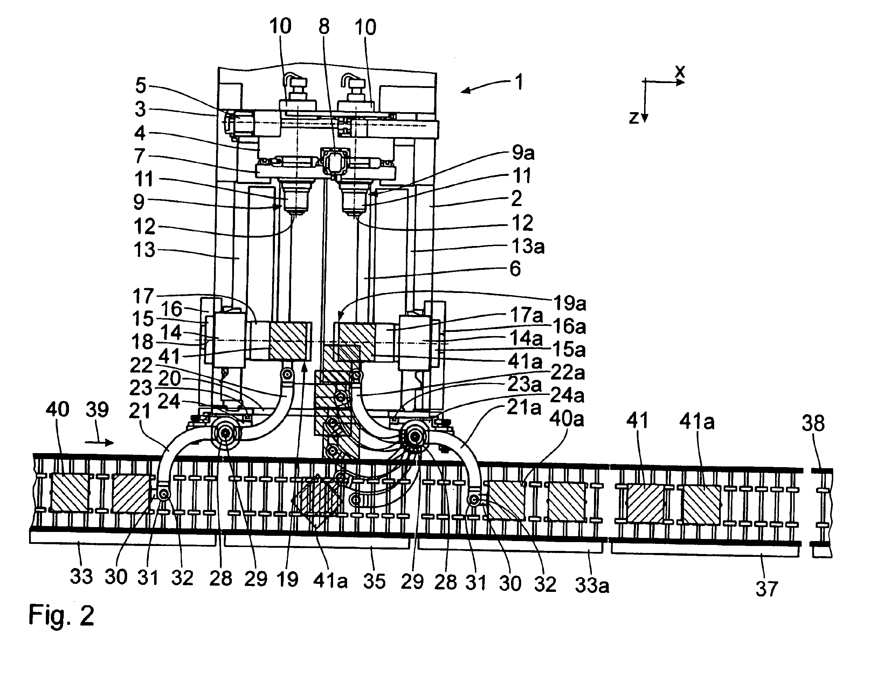

In den Fig. 1 und 2 ist eine Werkzeug-Maschine 1 dargestellt, die ein Maschinen-Bett 2 und einen von diesem hochragenden Ständer 3 aufweist. Am Ständer 3 ist ein in horizontaler x-Richtung verfahrbarer x-Schlitten 4 verschiebbar geführt, wobei dessen Verschiebe-Antrieb in x-Richtung mittels eines x-Motors 5 erfolgt. An der einem Arbeitsraum 6 zugewandten Vorderseite des x-Schlittens 4 ist ein y-Schlitten 7 in vertikaler y-Richtung verschiebbar geführt, dessen Verschiebebewegungen von einem y-Motor 8 ausgeführt werden. Am y-Schlitten 7 sind zwei sich in z-Richtung erstreckende Spindel-Einheiten 9, 9a in z-Richtung unverschiebbar angebracht. Die Spindel-Einheiten 9, 9a weisen jeweils eine von einem Spindel-Motor 10 drehantreibbare Spindel 11 auf, die an ihrem dem Arbeitsraum 6 zugewandten Ende eine Werkzeug-Aufnahme 12 aufweist. Die z-Richtung und damit die Richtung der Spindeln 11 steht senkrecht auf der x-y-Ebene.

An der Unterseite des Arbeitsraums 6 befinden sich auf dem MaschinenBett 2 zwei z-Führungen 13, 13a, auf denen jeweils ein Werkstück-Schlitten 14, 14a spiegelsymmetrisch zueinander angeordnet und in z-Richtung verfahrbar ist. Die Verfahr-Bewegungen des jeweiligen Werkstück-Schlittens 14, 14a erfolgen mittels Linear-Motoren 15, 15a, die jeweils über eine Kabel-Schlepp-Einrichtung 16, 16a mit Strom versorgt werden.

Auf den Werkstück-Schlitten 14, 14a ist jeweils eine Werkstück-Aufnahme 17, 17a angebracht, die um eine horizontale A-Achse 18 jeweils schwenkbar ausgebildet sein kann. Jeder Werkstück-Schlitten 14, 14a ist zwischen einer in Fig. 2 dargestellten Be- und Entlade-Position 19 bzw. 19a und einer nicht dargestellten Bearbeitungs-Position vor der jeweiligen Spindel-Einheit 9, 9a verfahrbar. Soweit die Werkzeug-Maschine 1 bis hierher beschrieben ist, ist sie im Grundsatz bekannt und in der Praxis üblich.

An der der Be- und Entlade-Position 19 bzw. 19a benachbarten Front-Seite 20 der Werkzeug-Maschine 1 sind obere Belade-Arme 21, 21a und untere Entlade-Arme 22, 22a angeordnet, wobei die übereinander angeordneten Arme 21, 22 bzw. 21 a, 22a identisch ausgebildet sind. Die einander zugeordneten Belade-Arme 21, 21a und die Entlade-Arme 22, 22a sind spiegelsymmetrisch zueinander angeordnet. Alle Arme 21 bis 22a sind etwa viertelkreisförmig, also um etwa 90 ° gekrümmt.

Die Belade-Arme 21, 21a sind auf vertikalen Schienen 23, 23a mittels oberer Hub-Schlitten 24, 24a vertikal, also in y-Richtung verschiebbar gelagert. Auf denselben Schienen 23, 23a sind untere Hub-Schlitten 25, 25a vertikal verschiebbar gelagert, die die Entlade-Arme 22 bzw. 22a tragen. Der Antrieb der Hub-Schlitten 24, 24a bzw. 25, 25a erfolgt jeweils mittels eines Hub-Motors 26. Jeder Arm 21, 21a bzw. 22, 22a ist auf dem ihn tragenden Hub-Schlitten 24, 24a bzw. 25, 25a mittels eines ersten Schwenk-Motors 28 um eine erste vertikale Schwenk-Achse 29 schwenkbar gelagert. Am freien Ende jedes Arms 21, 21a bzw. 22, 22a ist wiederum eine Werkstück-Trag-Einrichtung 30 angebracht, die als Werkstück-Greifer oder als sogenanntes Werkstück-Tablett ausgebildet sein kann. Die Werkstück-Trag-Einrichtung 30 ist gegenüber dem entsprechend Arm 21, 2 1 a bzw. 22, 22a mittels eines zweiten Schwenk-Motors 31 um eine zweite vertikale Schwenk-Achse 32 verschwenkbar.

Wie den Fig. 1 und 2 weiterhin entnehmbar ist, sind vor der Front-Seite 20 der Werkstück-Maschine 1 jeweils eine als Rollenband ausgebildete Haupt-Zuführ-Einrichtung 33 und eine ebenfalls als Rollenband ausgebildete Neben-Zufiihr-Einrichtung 33a angeordnet. Unterhalb der Zuführ-Einrichtungen 33, 33a sind Abführ-Einrichtungen 34, 34a vorgesehen, die ebenfalls als Rollenbänder ausgebildet sind und die - gleichermaßen wie die Zufuhr-Einrichtungen 33, 33a - miteinander fluchten. Die Werkstück-Aufnahmen 17, 17a sind vertikal zwischen den Zuführ-Einrichtungen 33, 33a und den Abfuhr-Einrichtungen 34, 34a angeordnet.

Vor der Werkzeug-Maschine 1 ist eine ebenfalls als Rollenband ausgebildete Hub-Einrichtung 35 angeordnet, die mittels eines Hub-Antriebs 36 zwischen zwei Positionen verschiebbar ist, nämlich einer oberen Position, in der sie die beiden Zuführ-Einrichtungen 33, 33a miteinander verbindet, und einer unteren Position, in der sie - entsprechend der Darstellung in den Fig. 1 und 2 - die Abführ-Einrichtungen 34, 34a miteinander verbindet. Das vertikale Verfahren der Hub-Einrichtung 35 ist immer dann möglich, wenn alle Arme 21, 21 a bzw. 22, 22a in den Arbeitsraum 6 hinein verschwenkt sind. Die Hub-Einrichtung 35 dient also als Überbrückungs-Einrichtung für die Lücken zwischen den Einrichtungen 33 und 33a bzw. 34 und 34a.

Der Neben-Zuführ-Einrichtung 33a und der Abführ-Einrichtung 34a ist eine weitere Hub-Einrichtung 37 nachgeordnet, die mit der Abführ-Einrichtung 34a einerseits und einer nachgeordneten, sich auf der Höhe der Neben-Zuführ-Einrichtung 33a befindlichen weiteren Haupt-Zuführ-Einrichtung 38 vertikal verschiebbar ist. Diese weitere Haupt-Zuführ-Einrichtung 38 führt zu einer nachgeordneten weiteren, nicht dargestellten Werkzeug-Maschine, auf der weitere Bearbeitungen vorgenommen werden.

Die Arbeitsweise ist wie folgt:

Bei in den Arbeitsraum 6 hinein verschwenkten Armen 21, 21a, 22, 22a und hochgefahrener Hub-Einrichtung 35 sind - in den Fig. 1 und 2 von links - in Transport-Richtung 39 unbearbeitete Werkstücke 40, die in der Zeichnung mit durchgezogenen Linien schraffiert dargestellt sind, in der Weise herangeführt worden, dass einerseits auf der Haupt-Zuführ-Einrichtung 33 Werkstücke 40 und auf der Neben-Zuführ-Einrichtung 33a ebenfalls unbearbeitete Werkstücke 40 vorhanden sind. Letztere sind von der Haupt-Zuführ-Einrichtung 33 über die Hub-Einrichtung 35 auf die Neben-Zuführ-Einrichtung 33 durchgefördert worden.

Nachdem die Hub-Einrichtung 35 in ihre in den Fig. 1 und 2 dargestellte untere Position herabgefahren ist, werden die Belade-Arme 21, 21a in ihre aus dem Arbeitsraum 6 herausgeschwenkte Position verschwenkt, in der sie mittels der jeweiligen Werkstück-Trag-Einrichtungen 30 das jeweils nächstliegende auf der Haupt-Zuführ-Einrichtung 33 liegende Werkstück 40 bzw. das auf der Neben-Zuführ-Einrichtung 33a befindliche Werkstück 40a ergreifen können. Die zweiten Schwenk-Motoren 31 verschwenken hierbei die jeweilige Trag-Einrichtung 30 derart relativ zum Belade-Arm 21 bzw. 21a, dass die Trag-Einrichtung 30 bei der Verschwenkung des jeweiligen Belade-Arms 21 bzw. 21 a exakt in Eingriff mit dem zu bearbeitenden Werkstück 40 bzw. 40a kommt. Zeitgleich ergreifen die Trag-Einrichtungen 30 der Entlade-Arme 22, 22a die auf den Werkstück-Aufnahmen 17, 17a befindlichen, bearbeiteten Werkstücke 41 bzw. 41 a. Durch entsprechende Ansteuerung der ersten Schwenk-Motoren 28 werden die Entlade-Arme 22, 22a mit den Werkstücken 41, 41a aus dem Arbeitsraum 6 herausgeschwenkt, wobei wiederum der jeweilige zweite SchwenkMotor 31 derart angesteuert wird, dass die Herausnahme des bearbeiteten Werkstücks 41a aus der Werkstück-Aufnahme 17 bzw. 17a verkantungsfrei erfolgt, wie es in Fig. 2 für den Entlade-Arm 22a dargestellt ist. Die aus dem Arbeitsraum 6 herausgeschwenkten Entlade-Arme 22, 22a werden mittels der unteren Hub-Schlitten 25, 25a nach unten verfahren, so dass die bearbeiteten Werkstücke 41 bzw. 41 a auf den Abführ-Einrichtungen 34, 34a abgesetzt werden können. Anschließend wird das bearbeitete Werkstück 41 über die Hub-Einrichtung 35 auf die Abführ-Einrichtung 34a verfahren, wo dann beide bearbeiteten Werkstücke 41 und 41 a über die weitere Hub-Einrichtung 37 auf die weitere Haupt-Zuführ-Einrichtung 38 gebracht werden, von wo aus sie zu einem weiteren Bearbeitungsvorgang zu einer weiteren Werkzeug-Maschine transportiert werden.

Während die Entlade-Arme 22, 22a mit den bearbeiteten Werkstücken 41, 41a in der geschilderten Weise aus dem Arbeitsraum 6 herausgeschwenkt werden, werden die unbearbeiteten Werkstücke 40, 40a, die in der bereits geschilderten Weise sich auf den Werkstück-Trag-Einrichtungen 30 der Belade-Arme 21, 21a befinden, um 180 ° in den Arbeitsraum 6 hinein verschwenkt, wobei durch entsprechende Ansteuerungen der zweiten Schwenk-Motoren 31 die Trag-Einrichtungen 30 und damit auch die unbearbeiteten Werkstücke 40, 40a in die richtige Position zu den Werkstück-Aufnahmen 17, 17a gebracht werden. Während des bereits geschilderten Absenkens der Entlade-Arme 22, 22a mit den bearbeiteten Werkstücken 41, 41a werden nunmehr die Belade-Arme 21, 21a durch entsprechenden Antrieb der oberen Hub-Schlitten 24, 24a in die Be- und Entlade-Position 19 bzw. 19a abgesenkt, so dass die Werkstücke 40, 40a von den Werkstück-Aufnahmen 17, 17a aufgenommen werden können. Werkstücke 40, 40a werden mittels des Werkstück-Schlittens 14 bzw. 14a in die Bearbeitungsposition vor der Spindel-Einheit 9, 9a verfahren und dort bearbeitet. Während dessen sind die Arme 21, 21 a und 22, 22a wieder in ihre jeweils obere Warteposition im Arbeitsraum 6 verfahren. Die Hub-Einrichtung 35 ist in ihre obere Position verfahren, in der ein unbearbeitetes Werkstück 40a auf die Neben-Zuführ-Einrichtung 33a durchgefördert werden kann.

Während des Aufnehmens und Absetzens von unbearbeiteten und von bearbeiteten Werkstücken 40, 40a bzw. 41, 41a machen die Arme 21, 21a bzw. 22, 22a geringfügige vertikale Bewegungen, und zwar mittels der Hub-Schlitten 24, 24a bzw. 25, 25a.

Wie bereits erwähnt, findet bei dem Ausführungsbeispiel nach den Fig. 1 und 2 jeweils ein serieller Bearbeitungsprozess statt, das bedeutet, dass auf nur einer Werkzeug-Maschine 1 eine Bearbeitung eines Werkstücks 40 bzw. 40a stattfindet, und dass das bearbeitete Werkstück 41 bzw. 41 a dann auf einer nachgeordneten, nicht dargestellten Werkzeug-Maschine in anderer Weise weiterbearbeitet wird.

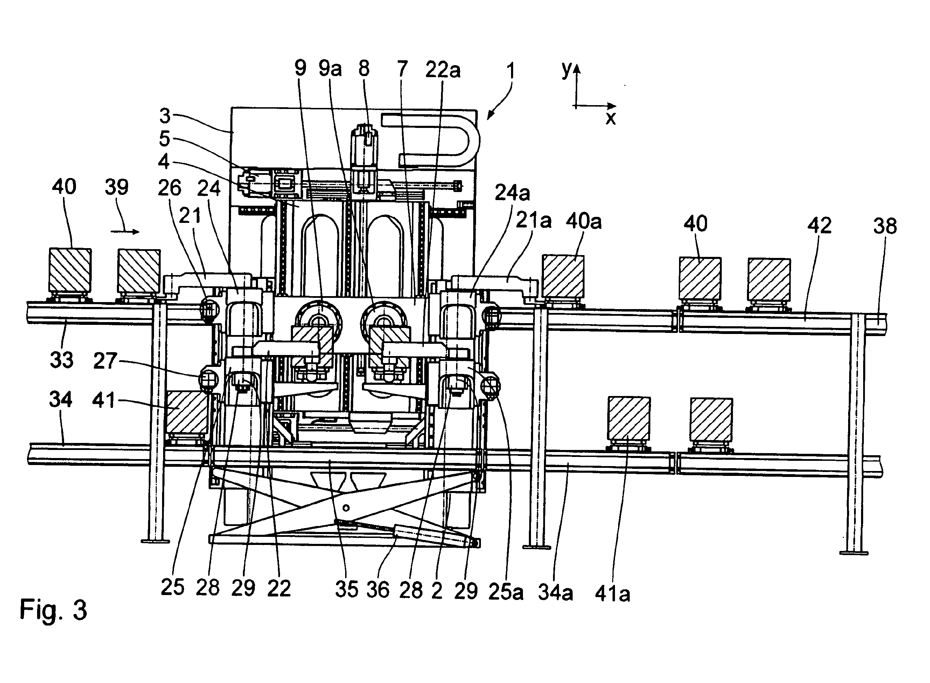

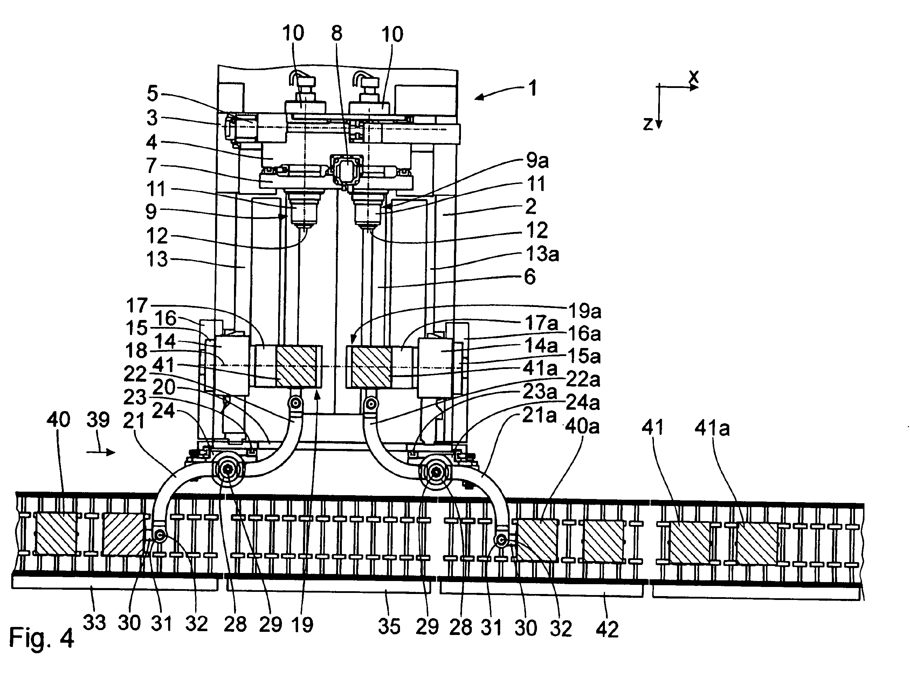

Demgegenüber findet bei dem Ausführungsbeispiel nach den Fig. 3 und 4 eine Parallelbearbeitung statt. Das heißt auf mehreren gleichen Werkzeug-Maschinen erfolgt parallel zueinander jeweils derselbe Bearbeitungsvorgang, wobei durch die Werkstück-Zu- und Abführung eine Optimierung der Maschinen-Nutzung erreicht wird. Die Werkzeug-Maschinen 1 sind grundsätzlich die gleichen wie bei dem Ausführungsbeispiel nach Fig. 1 und 2, so dass von einer erneuten Beschreibung Abstand genommen wird. Es bestehen lediglich Unterschiede hinsichtlich des Transports der Werkstücke 40, 40a bzw. 41, 41a. Anstelle der Neben-Zuführ-Einrichtung 33a ist eine weiterführende Haupt-Zuführ-Einrichtung 42 vorgesehen, die zum Transport unbearbeiteter Werkstücke 40 bzw. 40a zur nächsten nachgeordneten Werkzeug-Maschine dient. Bei bereits geschilderter hochgefahrener Hub-Einrichtung 35 wird nicht nur das von der Spindeleinheit 9a zu bearbeitende Werkstück 40a über die Hub-Einrichtung 35 gefördert, sondem es werden auch die unbearbeiteten Werkstücke 40 bzw. 40a auf die Haupt-Zuführ-Einrichtung 42 durchgefördert, die auf nachgeordneten Werkzeug-Maschinen parallel bearbeitet werden sollen.

Die Abführ-Einrichtung 34 fördert durchgehend weiter, so dass vor jeder nachfolgenden Werkzeug-Maschine die dort bearbeiteten Werkstücke 41 bzw. 41a mittels der entsprechenden Hub-Einrichtung 35 hierauf abgesetzt und endgültig abtransportiert werden. Die weitere Hub-Einrichtung 37 aus dem Ausführungsbeispiel nach den Fig. 1 und 2 entfällt hierbei.

## Patentansprüche

1. Beschickungs- und Entnahme-Anlage,
- mit mindestens einer Werkzeug-Maschine (1), die
-- eine Front-Seite (20),
-- mindestens eine Werkstück-Aufnahme (17, 17a) und
-- eine Be- und Entlade-Position (19, 19a) zur Beschickung der Werkstück-Aufnahme (17, 17a) mit unbearbeiteten Werkstücken (40, 40a) und zur Entnahme von bearbeiteten Werkstücken (41, 41 a) aus der Werkstück-Aufnahme (17, 17a) aufweist,
- mit einer linear ausgebildeten Zuführ-Einrichtung (33, 33a, 38, 42) zur Zuführung von unbearbeiteten Werkstücken (40, 40a) in einer Transport-Richtung (39) in den Bereich der Front-Seite (20),
- mit einer linear ausgebildeten Abführ-Einrichtung (34, 34a) zur Abführung von bearbeiteten Werkstücken (41, 41 a), wobei die Zuführ-Einrichtung (33, 33a, 38, 42) und die Abführ-Einrichtung (34, 34a) vertikal übereinander angeordnet sind,
**dadurch gekennzeichnet,**
- **dass** die Abführ-Einrichtung (34, 34a) zur Abführung von bearbeiteten Werkstücken (41, 41a) in Transport-Richtung (39) ausgebildet ist,
- **dass** die Be- und Entlade-Position (19, 19a) vertikal zwischen der Zuführ-Einrichtung (33, 33a, 38, 42) und der Abführ-Einrichtung (34, 34a) angeordnet ist,
- **dass** ein der Zuführ-Einrichtung (33, 33a, 38, 42) und der Werkstück-Aufnahme (17, 17a) zugeordneter, vertikal verschiebbarer, starr ausgebildeter und um eine vertikale Schwenk-Achse (29) schwenkbarer und mit einer Werkstück-Trag-Einrichtung (30) versehener Belade-Arm (21, 21 a) vorgesehen ist,
- **dass** ein der Werkstück-Aufnahme (17, 17a) und der Abführ-Einrichtung (34, 34a) zugeordneter, vertikal verschiebbarer, starr ausgebildeter, um eine vertikale Schwenk-Achse (29) und mit einer Werkstück-Trag-Einrichtung (30) versehener Entlade-Arm (22, 22a) vorgesehen ist und
- **dass** eine vertikal zwischen der Zuführ-Einrichtung (33, 33a, 38, 42) und der Abführ-Einrichtung (34, 34a) verschiebbare Hub-Einrichtung (35) zum wahlweisen Schließen jeweils einer Lücke in der Zuführ-Einrichtung (33, 33a, 38, 42) und der Abführ-Einrichtung (34, 34a) vorgesehen ist.

2. Beschickungs- und Entnahme-Anlage nach Anspruch 1, **dadurch gekennzeichnet,**
**dass** die Belade-Arme (21, 21a) und/oder die Entlade-Arme (22, 22a) gekrümmt ausgebildet sind.

3. Beschickungs- und Entnahme-Anlage nach Anspruch 2, **dadurch gekennzeichnet,**
**dass** die Belade-Arme (21, 21a) und/oder die Entlade-Arme (22, 22a) etwa viertelkreisförmig gekrümmt sind.

4. Beschickungs- und Entnahme-Anlage nach Anspruch 1, **dadurch gekennzeichnet,**
**dass** die Belade-Arme (21, 21a) und/oder die Entlade-Arme (22, 22a) mittels Hub-Schlitten (24, 24a, 25, 25a) vertikal verschiebbar sind.

5. Beschickungs- und Entnahme-Anlage nach Anspruch 4, **dadurch gekennzeichnet,**
**dass** die Hub-Schlitten (24, 25 bzw. 24a, 25a) jeweils übereinander auf einer gemeinsamen Schiene (23) verschiebbar angeordnet sind.

6. Beschickungs- und Entnahme-Anlage nach Anspruch 1, **dadurch gekennzeichnet,**
**dass** die Werkstück-Trag-Einrichtung (30) gegenüber dem sie tragenden Belade-Arm (21, 21a) und/oder dem sie tragenden Entlade-Arm (22, 22a) mittels Schwenk-Motoren (31) verschwenkbar sind.

7. Beschickungs- und Entnahme-Anlage nach Anspruch 1, **dadurch gekennzeichnet,**
**dass** die Zuführ-Einrichtung (33, 33a, 38, 42), die Abführ-Einrichtung (34, 34a) und die Hub-Einrichtung (35) als Rollenbänder ausgebildet sind.

8. Beschickungs- und Entnahme-Anlage nach Anspruch 1, **dadurch gekennzeichnet, dass** die aufweist und Werkzeug-Maschine zwei Werkstück-Aufnahmen (17, 17a)
dass Belade-Arme (21, 21a) und Entlade-Arme (22, 22a) an der Front-Seite (20) der Werkzeug-Maschine (1) angeordnet sind.

## Claims

1. Feed and removal system,
- with at least one machine tool (1), which
-- has a front side (20),
-- at least one workpiece receiver (17, 17a) and
-- a loading and unloading position (19, 19a) for feeding the workpiece receiver (17, 17a) with unmachined workpieces (40, 40a) and to remove machined workpieces (41, 41a) from the workpiece receiver (17, 17a),
- with a linearly configured supply device (33, 33a, 38, 42) for supplying unmachined workpieces (40, 40a) in a transport direction (39) into the region of the front side (20),
- with a linearly configured removal device (34, 34a) for removing machined workpieces (41, 41a), the supply device (33, 33a, 38, 42) and the removal device (34, 34a) being arranged vertically one above the other,
**characterized**
- **in that** the removal-device (34, 34a) is configured in the transport direction (39) for removing machined workpieces (41, 41a),
- **in that** the loading and unloading position (19, 19a) is arranged vertically between the supply device (33, 33a, 38, 42) and the removal device (34, 34a),
- **in that** a loading arm (21, 21a) is provided, which is associated with the supply device (33, 33a, 38, 42) and the workpiece receiver (17, 17a), an which loading arm is vertically displaceable, rigidly configured and pivotable about a vertical pivot axis (29) and provided with a workpiece carrying device (30),
- **in that** an unloading arm (22, 22a) is provided, which is associated with the workpiece receiver (17, 17a) and the removal device (34, 34a), an which loading arm is vertically displaceable, rigidly configured, pivotable about a vertical pivot axis (29) and provided with a workpiece carrying device (30) and
- **in that** a lifting device (35) is provided, which is vertically displaceable between the supply device (33, 33a, 38, 42) and the removal device (34, 34a) to selectively close, in each case, a gap in the supply device (33, 33a, 38, 42) and the removal device (34, 34a).

2. Feed and removal system according to claim 1, **characterized in that**, the loading arms (21, 21a) and/or the unloading arms (22, 22a) are curved.

3. Feed and removal system according to claim 2, **characterized in that**, the loading arms (21, 21a) and/or the unloading arms (22, 22a) are curved approximately in a quarter circle shape.

4. Feed and removal system according to claim 1, **characterized in that**, the loading arms (21, 21a) and/or the unloading arms (22, 22a) is vertically displaceable by means of lifting slides (24, 24a, 25, 25a).

5. Feed and removal system according to claim 4, **characterized in that**, the lifting slides (24, 25 or 24a, 25a) are in each case displaceably arranged one above the other on a common rail (23).

6. Feed and removal system according to claim 1, **characterized in that**, the workpiece carrying device (30) is pivotable relative to the loading arm (21, 21a) carrying it and/or the unloading arm (22, 22a) carrying it by means of pivot motors (31).

7. Feed and removal system according to claim 1, **characterized in that**, the supply device (33, 33a, 38, 42), the removal device (34, 34a) and the lifting device (35) are configured as roller belts.

8. Feed and removal system according to claim 1, **characterized in that** the machine tool has two workpiece receivers (17, 17a) and **in that** loading arms (21, 21a) and unloading arms (22, 22a) are arranged on the front side (20) of the machine tool (1).

## Revendications

1. Installation d'alimentation et d'enlèvement
- comprenant au moins une machine-outil (1), qui comprend
-- un côté frontal (20),
-- au moins un récepteur pour pièces à oeuvrer (17, 17a), et
-- un poste de chargement/déchargement (19, 19a) pour alimenter le récepteur pour pièces à oeuvrer (17, 17a) avec des pièces non oeuvrées (40, 40a) et pour enlever des pièces oeuvrées (41, 41a) hors du récepteur pour pièces à oeuvrer (17, 17a),
- un système d'admission (33, 33a, 38, 42) réalisé de façon linéaire pour alimenter des pièces non oeuvrées (40, 40a) dans une direction de transport (39) jusque dans la région du côté frontal (20),
- un système d'évacuation (34, 34a) réalisé de façon linéaire pour évacuer des pièces oeuvrées (41, 41a), le système d'admission (33, 33a, 38, 42) et le système d'évacuation (34, 34a) étant agencés verticalement l'un au-dessus de l'autre,
**caractérisée en ce que**
- le système d'évacuation (34, 34a) est réalisé pour l'évacuation de pièces oeuvrées (41, 41a) en direction de transport (39),
- le poste de chargement/déchargement (19, 19a) est agencé verticalement entre le système d'admission (33, 33a, 38, 42) et le système d'évacuation,
- il est prévu un bras de chargement (21, 21a), associé au système d'admission (33, 33a, 38, 42) et au récepteur pour pièces à oeuvrer (17, 17a), déplaçable verticalement, réalisé sous forme rigide, capable de pivoter autour d'un axe de pivotement vertical (29) et pourvu d'un système porteur (30) pour pièces à oeuvrer,
- il est prévu un bras de déchargement (22, 22a), associé au récepteur pour pièces à oeuvrer (17, 17a) et au système d'évacuation (34, 34a), déplaçable verticalement, réalisé sous forme rigide, capable de pivoter autour d'un axe de pivotement vertical (29) et pourvu d'un système porteur (30) pour pièces à oeuvrer, et
- il est prévu un système de levage (35), déplaçable verticalement entre le système d'admission (33, 33a, 38, 42) et le système d'évacuation (34, 34a), pour la fermeture sélective d'une lacune respective dans le système d'admission (33, 33a, 38, 42) et le système d'évacuation (34, 34a).

2. Installation d'alimentation et d'enlèvement selon la revendication 1, **caractérisée en ce que**
les bras de chargement (21, 21a) et/ou les bras de déchargement (22, 22a) sont réalisés incurvés.

3. Installation d'alimentation et d'enlèvement selon la revendication 2, **caractérisée en ce que**
les bras de chargement (21, 21a) et/ou les bras de déchargement (22, 22a) sont incurvés approximativement en forme de quart de cercle.

4. Installation d'alimentation et d'enlèvement selon la revendication 1, **caractérisée en ce que**
les bras de chargement (21, 21a) et/ou les bras de déchargement (22, 22a) sont déplaçables verticalement au moyen de chariots de levage (24, 24a, 25, 25a).

5. Installation d'alimentation et d'enlèvement selon la revendication 4, **caractérisée en ce que**
les chariots de levage (24, 25 ou respectivement 24a, 25a) sont agencés déplaçables respectivement l'un au-dessus de l'autre sur un rail commun (23).

6. Installation d'alimentation et d'enlèvement selon la revendication 1, **caractérisée en ce que**
le système porteur pour pièces à oeuvrer (30) est capable de pivoter par rapport au bras de chargement (21, 21a) qui le porte et/ou par rapport au bras de déchargement (22, 22a) qui le porte, au moyen de moteurs pivotants (31).

7. Installation d'alimentation et d'enlèvement selon la revendication 1, **caractérisée en ce que** le système d'admission (33, 33a, 38, 42), le système d'évacuation (34, 34a) et le système de levage (35) sont réalisés sous forme de bandes à rouleaux.

8. Installation d'alimentation et d'enlèvement selon la revendication 1, **caractérisée en ce que** la machine-outil comprend deux récepteurs pour pièces à oeuvrer (17, 17a), et
les bras de chargement (21, 21a) et les bras de déchargement (22, 22a) sont agencés sur le côté frontal (20) de la machine-outil (1).
